# EUROPEAN PATENT SPECIFICATION

(11) **EP 1 798 202 B1**
(45) Date of publication and mention of the grant of the patent: **17.07.2013**
(21) Application number: 04772900.9
(22) Date of filing: 02.09.2004
(51) Int. Cl.: B01D 1/28, B01D 1/30, B01D 5/00, C02F 1/12, B01D 3/06, C02F 1/04, C02F 1/06

(54) **SINGLE STAGE FLASH EVAPORATION APPARATUS BASED ON MECHANICAL VAPOR COMPRESSION METHOD**
EINSTUFENENTSPANNUNGSVERDAMPFUNG VORRICHTUNG NACH DEM VERFAHREN DER MECHANISCHEN DAMPFVERDICHTUNG
APPAREIL D' ÉVAPORATION PAR PURGE À SIMPLE ÉTAGE SELON UN PROCÉDÉ DE COMPRESSION DE VAPEUR MÉCANIQUE

(43) Date of publication of application: 20.06.2007
(73) Proprietor: Aquasystems Inc., Hyogo 654-0012 (JP)
(72) Inventor: KISHI, Masahiro, Takasago-shi, Hyogo 676-0805 (JP)
(74) Representative: Chettle, Adrian John
(86) International application number: PCT/JP2004/013086
(87) International publication number: WO 2006/025117

(56) References cited:
- JP-A- 5 293 460
- JP-A- 62 241 592
- JP-A- 2003 521 375
- US-A- 2 619 453
- US-A- 4 537 039

## Description

### Technical Field

The present invention relates to a seawater desalination apparatus, in particular, to an evaporation chamber for use in a seawater desalination apparatus using a single-stage flash-evaporation method combined with a mechanical vapor compression method.

### Background Art

Fresh water generating apparatuses presently in practical use as seawater desalination apparatuses are largely divided into those using evaporation methods and membrane methods (reverse osmosis, etc.). The membrane method is superior to the evaporation method from an economical point of view; however, the membrane method requires high-level pretreatment techniques depending on the properties of the seawater, and may cause degradation of the membrane without appropriate pretreatment. The evaporation method is highly valued in terms of reliability and usability.

Among the several types of the fresh water generating apparatuses using the evaporation method, those most typically used are a multi-stage flash-evaporation fresh water generating apparatus (hereinafter referred to as "MSF"), a multi-effect vaporizer-type fresh water generating apparatus combined with thermal vapor compression (TVC-MED; hereinafter referred to as "TVC"), and a single-stage flash-evaporation fresh water generating apparatus combined with mechanical vapor compression (Single Stage-MVC; hereinafter referred to as "MVC").

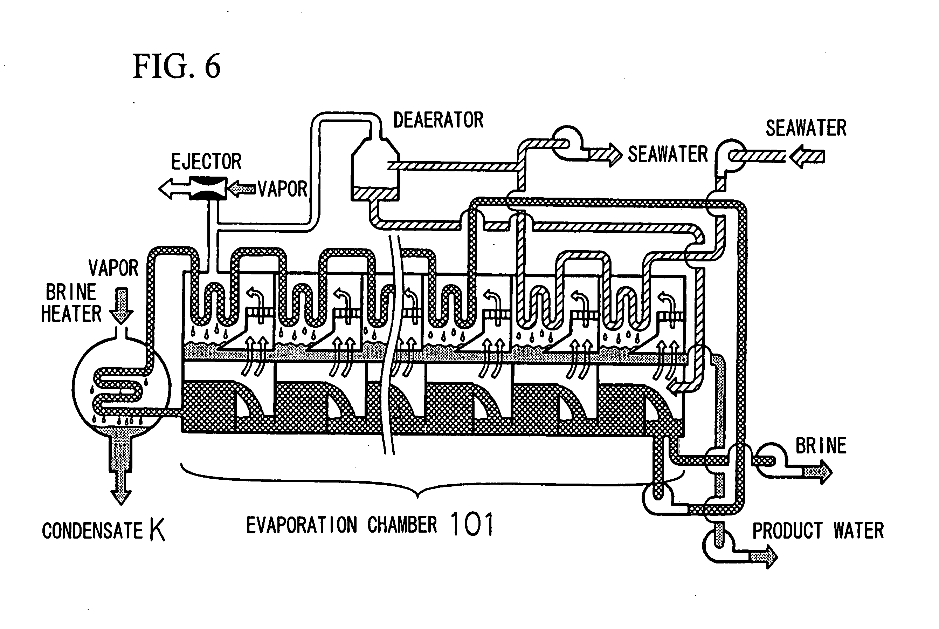

The MSFs have been proven in many practical applications as large-capacity fresh water generating apparatuses; as shown in Fig. 6, however, the MSF is constructed to perform flash-evaporation at low pressure in stages using an evaporation chamber 101 including many sections (stages) each slightly changing the operating pressure. Therefore, the evaporation chamber increases in size, which increases the required heating area. As a result, the size of the overall facility increases, thus requiring a larger site and higher construction costs.

Since the evaporation chamber is divided into a plurality of stages in each of which the operating pressure is slightly changed, it is difficult to control the pressure in each stage to maintain equilibrium. The starting and stopping operations for the apparatus are thus difficult and take time; therefore, the apparatus is generally run in a continuous operation mode.

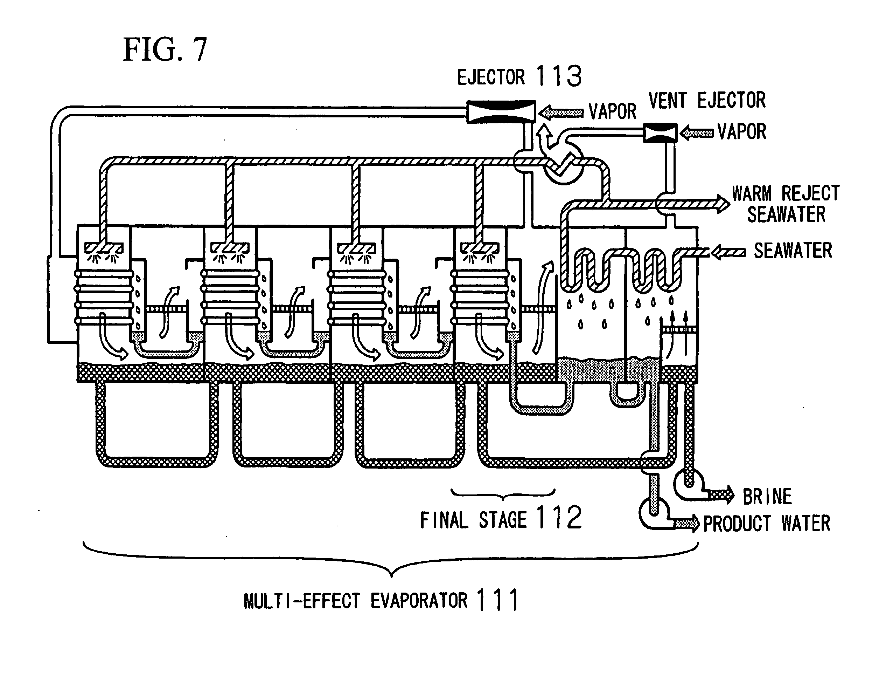

As shown in Fig. 7, using a vapor of approximately 20 Bar, the TVC pressurizes vapor in a final stage 112 of a multi-effect vaporizer 111 having four to five stages using an ejector 113. Since the latent heat of vapor for pressurization can be completely used, construction costs and energy costs required for the fresh water generation are lower than those for MFS.

Moreover, since the multi-effect vaporizer 111 performs evaporation heating, the heat-transfer coefficient is high. Furthermore, since it is not necessary to circulate the brine and no moving parts are provided, it is easy to operate and maintain the apparatus. The multi-effect vaporizer 111 is thus commonly used as a medium- or small-capacity fresh water generating apparatus.

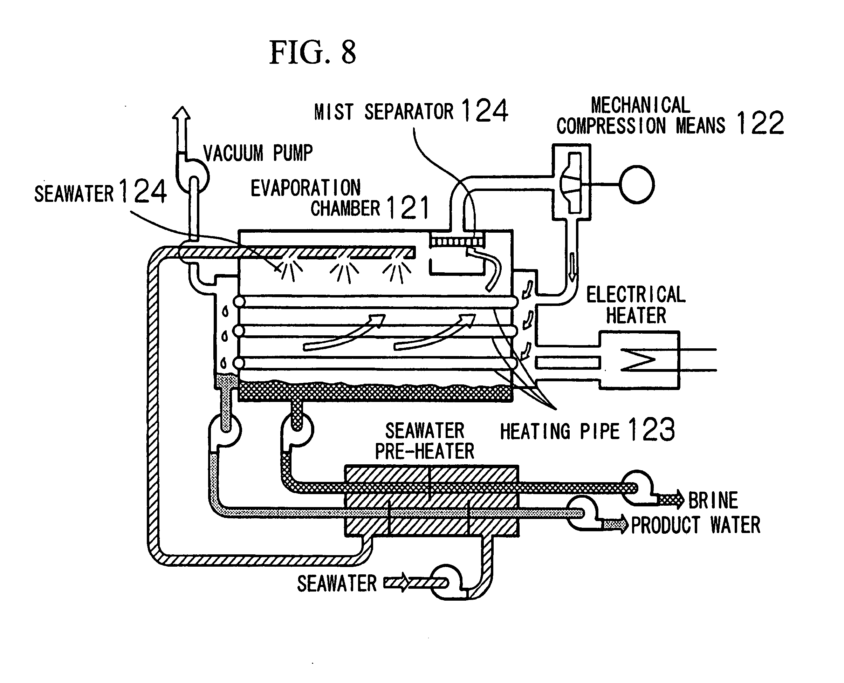

On the other hand, as shown in Fig. 8, the conventional type of MVC uses an evaporation chamber 121 of the type in the vapor generated in the evaporation chamber is compressed by mechanical vapor compression means 122, such as a blower or a compressor, the vapor whose temperature and pressure are increased by the compression flows into a heating tube 123 provided in the evaporation chamber, and water is evaporated from seawater 124 that is sprayed from above the evaporation chamber using its heat of condensation.

Because the external surface of the heating tube performs evaporation heating, like the TVC, advantages are provided in that its heat-transfer coefficient is high, no brine circulation is needed, the heating area and facility size are smaller compared to those in the MSF, a large site is not necessary, construction costs are lower, and control for starting up, stopping, and operating the facility is simplified.

However, as described below, there are some difficulties in increasing the capacity. Also, in medium-capacity and small-capacity applications, MVC is not commonly used because TVC is easier to operate and maintain.

These types of fresh water generating apparatuses have a common problem that hard scaling is produced in the evaporation chamber.

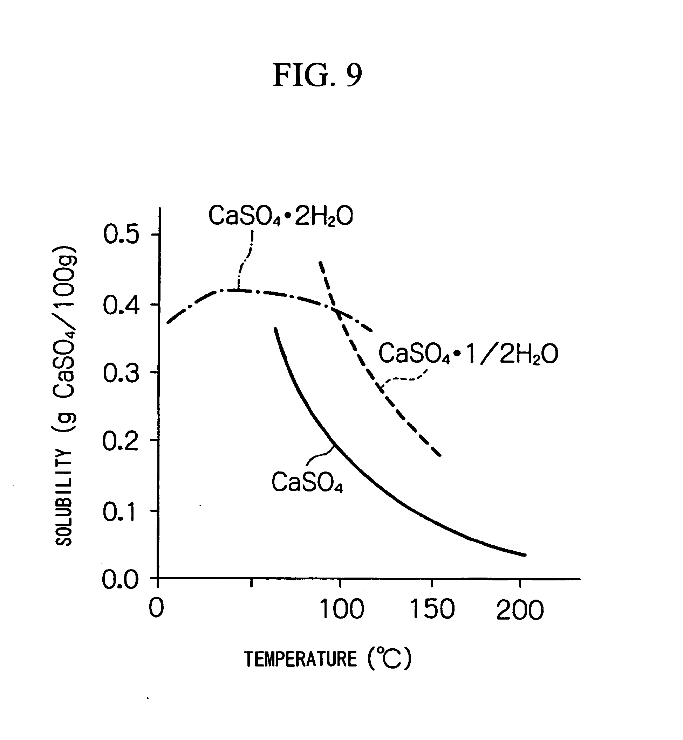

As shown in Fig. 9, the solubility of CaSO₄, which is the main component of the hard scaling, varies with temperature. Also, the crystal form in which CaSO₄ precipitates differs according to temperature: at 70°C or less, dihydrated CaSO₄· 2H₂O precipitates, from 70°C to 90°C, anhydrous CaSO₄ precipitates, and above 90°C, hemihydrate CaSO₄·1/2H₂O precipitates.

Therefore, conventionally the production of scaling has been prevented by maintaining the pressure of the vapor passing through the heating tube at a low pressure of about 0.3 bar to maintain the temperature of the external surface of the heating tube in a temperature range where the solubility of anhydrous CaSO₄ is sufficiently high, namely, from 65°C to 70°C.

However, in this low-pressure region adopted by these conventional types of fresh water generating apparatuses, the specific volume of the vapor generated by flash-evaporation is extremely high.

Particularly in MVC, since the generated vapor must be compressed by a blower or the like, when manufacturing a large-capacity MVC, it is necessary to make a larger type of blower or the like capable of dealing with an extremely large volume flow rate. It is difficult to make an extra-large blower, etc., which is one of the reasons that large-capacity fresh water generating apparatuses using MVC have not been put into practical use.

In order to solve this problem involving the manufacturing limit of the blower, etc., various inventions have been proposed, such as US Patent No. 5,676,801.

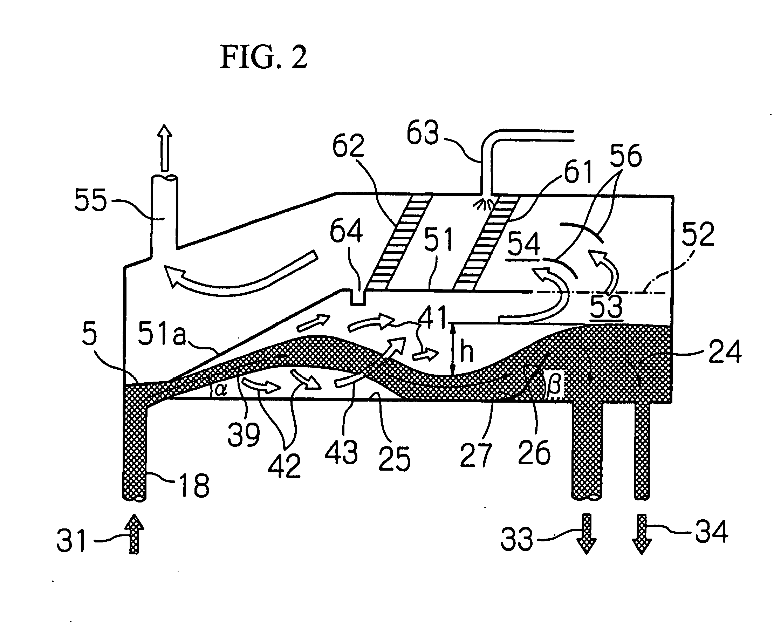

In addition, related to this problem, an idea for a system to raise the operating pressure of an evaporation chamber, for example, a system operating at atmospheric pressure has also been proposed (see Fig. 2 in Yehia M. El-Sayed, "Thermoeconomics of some options of large mechanical vapor-compression units", Desalination 125 (1999) 251-257).

When the vapor pressure is raised to near atmospheric pressure according to this proposal, the specific volume of the vapor handled by the blower or the like significantly decreases. Therefore, the problem of the large size of the blower can be solved; however, a problem arises in the precipitation of the CaSO₄ scaling described above.

Namely, when the temperature rises, not only does the amount of precipitation increase due to low solubility, but also the crystallization rate becomes very high. Therefore, when evaporation heating is carried out close to atmospheric pressure, as in this proposal, that is, close to 100°C as in conventional MVC, a large amount of scaling is precipitated quickly on the heating surface.

In addition, the second reason that MVC-based large-capacity fresh water generating apparatuses have not been put into practical use is the problem of power costs for generating fresh water.

Unlike the MSF, which performs flash-evaporation in stages using an evaporation chamber including many stages, MVC performs flash-evaporation using a single-stage. The temperature difference of the brine (or seawater) between the inlet and outlet of the evaporation chamber is thus small.

The amount of water generated by a fresh water generating apparatus is calculated by multiplying the "temperature difference of the brine (or seawater) between the inlet and outlet of the evaporation chamber" by "the amount of the brine (or seawater) passing through the evaporation chamber", and dividing it by the "latent heat of vaporization". Therefore, to produce the same amount of water, a large amount of brine, or seawater, which is inversely proportional to the temperature difference of the brine (or seawater), must be circulated.

For example, the temperature difference of the brine is about 67°C in an MSF, whereas the temperature difference of the seawater is about 3.5°C to 5°C in an MVC; the difference is thus 13 to 20 times greater.

Consequently, to produce the same amount of water in an MVC, a large amount of brine or seawater must be circulated, from 13 to 20 times as in an MSF, resulting in a large amount of power therefor, which leads to some awareness of the high cost of generating fresh water.

The reason that large-capacity MVCs operating at atmospheric pressure have not been put into practical use is presumably because, even if the problems of the blower or the like are solved by the blower invention described above or the idea of operating at atmospheric pressure, the problem of scaling in the evaporation chamber and power costs needed for circulating the brine or seawater still remain.

To achieve large-capacity MVCs, scaling must be prevented from being produced in the evaporation chamber, particularly on the heating surface thereof, the power required for circulating the brine or seawater must be reduced, flash-evaporation must be performed effectively, smoothly, and stably in as small an evaporation chamber as possible, and cost effectiveness should be pursued by reducing the size of the evaporation chamber. In addition, the flow of the brine or seawater should be stable for stable operation of the fresh water generating apparatus.

Furthermore, in MVC, when a large amount of mist is contained in the vapor flowing from the evaporation chamber to the blower or the like, scaling compounds carried by the mist are deposited and condense on the blade surface of the blower or the like, which causes mechanical problems in the blower, such as corrosion due to precipitation of scaling. Therefore, it is important to substantially reduce the amount of mist carried in the vapor from the evaporation chamber.

Therefore, the problem is to develop an evaporation chamber which can solve these problems to realize a large-capacity MVC.

US-A-2619453 discloses apparatus for distilling water from a hard water source, and relying upon vapor/compression distillation.

### Disclosure of Invention

The present invention provides a single stage flash-evaporation fresh water generating apparatus having the features of Claim 1 appended hereto.

That is, instead of an evaporation chamber including heat exchanging means for heating seawater, as used in a conventional MVC, the present invention is an MVC divided into the evaporation chamber exclusively for flash evaporating the brine and the heat exchanging means exclusively for heating the brine by condensing the vapor 2.

Because evaporation heating of the seawater is carried out at a heating surface in the conventional MVC, the production of scaling on the heating surface is unavoidable. In contrast, with the configuration of the present invention, because condensation heating of the vapor generated in the evaporation chamber is carried out at the heating surface, when the pressure of the brine at the side to be heated is kept at at least the saturation pressure for the temperature of the vapor 2 at the heating side, the brine is easily prevented from boiling, and thus the production of scaling is limited.

Therefore, the brine in the heat exchanging means should always be kept at at least the saturation pressure for the temperature of the vapor 2 at the heating side, regardless of the operating condition of the fresh water generating apparatus.

By separating the evaporation chamber from the heat exchanging means, and disposing the evaporation chamber at a sufficiently higher position than the heat exchanging means, the head difference thereof provides the pressure required for preventing the brine in the heat exchanging means from generating scaling, that is, a pressure higher than the saturation pressure for the temperature of the vapor 2.

Described in more detail, the saturation pressure for the temperature of the vapor 2 compressed by the mechanical compression means is designed/applied so as to have a fixed pressure difference relative to the pressure of the vapor 1.

On the other hand, the pressure of the brine in the heat exchanging means in normal operation is the pressure obtained by adding the head difference and a pipe resistance from the heat exchanging means to the evaporation chamber to the pressure of the evaporation chamber. Therefore, if the total of the pipe resistance and the head difference is the fixed pressure difference or above, the brine does not usually boil in the heat exchanging means.

However, the flow of brine may stop for some reason, resulting in the pipe resistance of the pipes and so on from the heat exchanging means to the evaporation chamber being zero. In this case, the pressure of the brine inside the heat exchanging means decreases by an amount equal to the drop in pipe resistance. The brine thus boils when the pressure of the brine is equal to the saturation pressure or below.

Even in this case, if the evaporation chamber is disposed at a higher position than the heat exchanging means so that the value obtained by adding the head difference H between the evaporation chamber 3 and the heat exchanging means 4 to the pressure of the evaporation chamber is higher than the saturation pressure for the temperature of the vapor 2, the problem of the generation of scaling on the heating surface can be avoided in any operating state.

In particular, in a fresh water generating apparatus where the evaporation chamber is operated near atmospheric pressure, that is, close to 100°C, the crystallization rate of the scaling becomes extremely high compared to a fresh water generating apparatus which is operated at between 65°C and 70°C. Therefore, it is necessary to always keep the head difference so scaling never precipitates.

In the invention, the brine pushed by the circulating means and output from the heat exchanging means flows upward through the connecting pipe and reaches the evaporation chamber. A nozzle which is oriented in a direction between 0° and 50° above the horizontal and whose flow-path cross-section gently reduces is provided at a portion where the brine flowing upward enters the evaporation chamber. The brine enters the evaporation chamber through the nozzle and is flash-evaporated.

By gradually reducing the flow-path cross-section of the nozzle, a portion of the static pressure held in the brine is efficiently converted to dynamic pressure. By orienting the nozzle at angle between 0° and 50° above the horizontal, the brine output from the nozzle contains a large velocity component in the horizontal direction.

While performing strong flash-evaporation, the brine output from the nozzle flows toward a brine outlet at a position opposite the nozzle inside the evaporation chamber due to the velocity component in the horizontal direction. The bottom surface of the evaporation chamber is divided into a portion close to the nozzle, that is, the portion where the flash-evaporation is carried out, and the remaining portion thereof. By designing the bottom surface so that the former portion is horizontal and the latter portion is inclined at an angle between 20° and 60° above the horizontal, the velocity component of the brine in the horizontal direction is efficiently re-converted to static pressure, because the brine runs up the inclined bottom surface. The converted static pressure advantageously reduces the power required for the circulating means by that same amount.

In this case, it is preferable that a gently curved surface be disposed between the horizontal portion of the bottom surface and the portion of the bottom surface that is inclined at an angle between 20° and 60° above the horizontal.

At the connecting portion of these two bottom surfaces, the resistance against the flow of brine decreases, or energy loss caused by vortices at this point is minimized. Conversion to the static pressure can thus be performed more efficiently, which leads to a reduction in circulation power by that same amount.

In addition, in the evaporation chamber according to the present invention, it is preferable that the nozzle be formed so as to have a slit-shaped outlet extending laterally close to the bottom surface of a wall facing the horizontal portion of the bottom surface of the evaporation chamber, and that an ejection direction from the nozzle be oriented 20° to 50° above the horizontal.

Effective flash-evaporation decreases the difference between the temperature of the brine at the evaporation chamber outlet and the saturation temperature in the evaporation chamber, that is, a non-equilibrium temperature difference (hereinafter referred to as "NETD"). When the NETD decreases, the temperature of the brine decreases at the evaporation chamber outlet. The amount of water to be produced corresponding to the amount of circulating brine increases accordingly. In contrast, because an increase in the temperature difference in the heat exchanging means allows a reduction in the heating area thereof, it is possible to reducing equipment costs and the power required for circulation.

The NETD in a small evaporation chamber can be reduced by dispersing the fluid to be flash-evaporated, as much as possible, inside the evaporation chamber by breaking it up into small particles, reducing the effective area involved in heating by making the flow of fluid turbulent, or increasing the ratio of the depth of fluid that can be flash evaporated to the total fluid depth by decreasing the depth of the brine inside the evaporation chamber.

However, since a large-capacity seawater desalination apparatus uses a large quantity of brine, it is difficult to use the dispersion method based on breaking up the brine into small particles. On the other hand, to reduce the depth of the brine, a nozzle whose flow-path cross-section gently reduces is formed to have a slit-shaped outlet extending in the lateral direction by efficiently using the width of one wall of the evaporation chamber to allow the brine to flow into the evaporation chamber in laminar form.

However, in this case, when the brine is simply injected into the evaporation chamber along the bottom surface, only the area of the upper surface of the brine covering the bottom surface of the evaporation chamber contributes to vapor generation.

Therefore, by orienting the ejection direction of the nozzle at 20° to 50° above the horizontal, the brine is ejected from the nozzle obliquely upward to form a space between the laminar stream of the ejected brine and the bottom surface of the evaporation chamber. As a result, the ejected laminar stream has an area involving the upper and lower surfaces contributing to vapor generation, thus improving the vapor generation by that same amount. Also, the vapor generated from the lower surface of the ejected laminar stream causes the vapor flow to break through the laminar stream and escape upward; therefore, the ejected laminar stream is disturbed, further accelerating the vapor.

The acceleration of vapor allows the amount of vapor per unit floor space of the evaporation chamber to be increased and the NETD to be decreased, thus allowing effective flash-evaporation in a relatively small evaporation chamber.

Also, in the evaporation chamber according to the present invention, the pressure of the brine entering the nozzle from the connecting pipe is higher than the pressure inside the evaporation chamber by a pressure difference of 1.1 to 1.5 times a difference between the saturation pressure corresponding to the temperature of the brine and the pressure inside the evaporation chamber.

With the above configuration, heat exchanging means is disposed at a lower position than the evaporation chamber by the head difference; therefore they are connected vertically by a connecting pipe.

The static pressure of the brine flowing upward in the connecting pipe toward the evaporation chamber decreases as the position of the brine becomes higher. Also, a portion of the static pressure of the brine at the outlet of the connecting pipe is gradually converted into dynamic pressure in the nozzle. The static pressure of the brine decreases accordingly. Since the brine is heated by the heat exchanging means to a saturation temperature of the evaporation chamber or above, there is a possibility that a portion of bhe brine starts vapor generation after being output from the nozzle and before the pressure of the brine becomes equal to the pressure of the evaporation chamber, that is, in the nozzle, or it may start vapor generation while flowing upward in the connecting pipe.

When the vapor generation starts in the connecting pipe, or at a portion located lower than the outlet thereof in the nozzle, the apparent specific gravity of the brine in the portion where the vapor generation starts changes, causing pressure fluctuations of the brine or unstable brine circulation in the whole system.

Thus, the nozzle is designed so that the pressure of the brine entering the nozzle from the connecting pipe is higher than the pressure inside the evaporation chamber by a pressure difference of 1.1 to 1.5 times a difference between "the saturation pressure corresponding to the temperature of the brine" flowing into the evaporation chamber and "the pressure inside the evaporation chamber". By doing so, the static pressure of the brine becomes the saturation pressure for the temperature thereof at the position where the brine almost reaches the nozzle outlet. Of course, the vapor generation does not occur in the connecting pipe, nor in the nozzle, except at the portion close to the nozzle outlet, thus preventing pressure fluctuations of the brine or unstable brine circulation in the whole system.

Furthermore, in the evaporation chamber according to the present invention, preferably, the evaporation chamber has a wall that splits the evaporation chamber into two at an upper portion and a lower portion, the wall has an opening, close to the brine outlet, for allowing the vapor 1 to flow through from the lower portion of the evaporation chamber to the upper portion of the evaporation chamber, an outlet for the vapor 1 is provided at the opposite side from the opening in the upper portion of the evaporation chamber, and the direction thereof is made to reverse when the vapor 1 flows through the opening from the upper portion of the evaporation chamber to the lower portion of the evaporation chamber.

As described above, in the evaporation chamber according to the present invention, the brine ejected from the slit-shaped outlet of the nozzle provided at one of the walls thereof performs the flash-evaporation by flowing toward an opposite-side due to the velocity component in the horizontal direction. A brine outlet is provided close to the opposite-side wall. The brine is sent from the evaporation chamber to the circulating means via the brine outlet.

By providing the wall that divides the evaporation chamber into two at an upper portion and a lower portion, by providing an opening as described above, and by providing and an outlet from the evaporation chamber for the vapor 1 in the opposite direction from the opening, in other words, in the same wall side as the nozzle on the other side of the wall that splits the evaporation chamber into two vertically, the vapor generated by the flash-evaporation flows in the same direction as the brine in the lower portion of the evaporation chamber, reverses its flow direction at the opening, and flows in the upper portion of the evaporation chamber in the opposite direction toward the outlet. Most of the mist contained in the vapor can be separated using its inertia by changing its direction by 180° at the opening, which allows a substantial decrease in the amount of mist in the vapor flowing to the mechanical vapor compression means.

In addition, in the evaporation chamber according to the present invention, it is preferable that, in the upper portion of the evaporation chamber, a plurality of substantially vertical mist separators which intercept the flow of vapor 1 whose direction is reversed be provided, and a spray device for cleaning the mist separator disposed at least at the extreme upstream side of the flow of vapor 1 be provided.

By providing the evaporation chamber with a plurality of mist separators to intercept the flow of the vapor 1, it is possible to further collect the mist that cannot be separated by changing its direction by 180°, as described above.

On the other hand, when the mist collected by the mist separator remains deposited on the mist separator, it becomes re-entrained by the force of the vapor 1 that passes therethrough, resulting in an increase in the amount of the mist in the vapor 1. In a horizontal mist separator, which is commonly used in the conventional MVC, arranged in such a manner so as to intercept the vapor flowing vertically, there is a problem of re-entrainment of the collected mist that does not smoothly exit.

Therefore, in the present invention, by using substantially vertical mist separators, the collected mist easily flows down along the mist separator, thus allowing re-entrainment to be prevented.

Also, at least one spraying device for cleaning is provided at the mist separator disposed the extreme upstream side of the flow of vapor 1.

The cleaning water sprayed by this device dilutes the mist disposed on the mist separator to prevent scaling. By making the vapor 1 a saturated vapor, the following advantage is provided.

Namely, as described above, the temperature of the brine flowing into the evaporation chamber is higher than the saturation temperature for the pressure in the evaporation chamber, and is also higher than the saturation temperature by the NETD at the brine outlet of the evaporation chamber. Therefore, the vapor 1 in contact therewith is slightly superheated.

When the superheated vapor is sent to the mist separators or the mechanical vapor compression means containing the remaining mist, the mist is vaporized by the superheated temperature. The scaling compounds contained in the mist precipitate in the mist separators or the mechanical vapor compression means, which causes problems.

By spraying the cleaning water, superheating of the vapor 1 can be eliminated, scaling precipitation in the mist separators or the mechanical vapor compression means can be prevented, and the related problem as described above can be reduced.

Also, the sprayed cleaning water contributes to the separation efficiency of the mist separators.

Specifically, water used for the spraying device for cleaning in the MVC is generally water condensed by the heat exchanging means. This condensed water maintains its temperature higher than the saturation temperature of the evaporation chamber; therefore, upon being output from the spray device, a portion of the condensed water splashevaporated, and that portion itself generates mist, thus increasing the amount of the mist.

The mist separators are members in which thin metal wires are consolidated in the form of a sponge or the like. Vapor containing mist passes through the narrow gaps between the metal wires while repeatedly colliding with them, resulting in a mist capturing effect due to the remaining mist left behind on those members because of the collisions. Thus, when a certain amount of mist gathers on the mist separators, the narrow gaps become progressively narrower, and the collisions become frequent, and the mist is more easily captured.

Therefore, the increased amount of the mist due to the splash-evaporation of the cleaning water improves the separation efficiency.

For the same reason, the separation efficiency improves not only in the mist separator provided with the spray device but also in the mist separator provided at the downstream side.

By arranging the mist separators substantially vertically, water used for cleaning flows down from the upper portion to the lower portion along the mist separator and is useful for cleaning to the lower portion of the mist separators. By adopting substantially vertical mist separators, the water is also easily discharge after completing cleaning.

Furthermore, in the evaporation chamber according to the present invention, it is preferable that the mist separator to be cleaned be divided into multiple portions, and that the spray device for cleaning clean each of the separate portions in turn.

By separating the mist separator into multiple portions and cleaning them in turn, the increased pressure loss of the mist separator caused by the deposition of the cleaning water is limited to within some regions where the cleaning is being carried out. The increased pressure loss can thus be alleviated as a whole, and effective use of the cleaning water is achieved by intermittent cleaning.

As described above, with the present invention, it is possible to provide an evaporation chamber, required for realizing a large-capacity MVC, in which it is possible to overcome the problem of the production of scaling on heating surfaces, to reduce the power required for circulating brine, to operate the overall system with stabilized pressure variations, to perform effective, stable and smooth flash evaporation in as small an evaporation chamber as possible, and to drastically remove mist in the vapor sent from the evaporation chamber to the mechanical vapor compression means, to prevent the production of scaling in the mechanical vapor compression means.

### Brief Description of Drawings

Fig. 1 is an overall diagram of a single-stage flashevaporation fresh water generating apparatus using mechanical vapor compression, in which an embodiment of an evaporation chamber according to the present invention is used.
Fig. 2 is a sectional view of the embodiment of an evaporation chamber according to the present invention.
Fig. 3 is a diagram of the embodiment of a nozzle provided in an evaporation chamber according to the present invention.
Fig. 4 is a table showing examples of flow rate, dynamic pressure, static pressure, and total pressure which brine exhibits at each point of the nozzle shown in Fig. 3.
Fig. 5 is a diagram of an embodiment of a spraying device for cleaning provided in an evaporation chamber according to the present invention.
Fig. 6 is a diagram of an MSF used conventionally.
Fig. 7 is a diagram of a TVC used conventionally.
Fig. 8 is a diagram of an MVC used conventionally.
Fig. 9 shows a solubility curve of calcium sulfate.

### Best Mode for Carrying Out the Invention

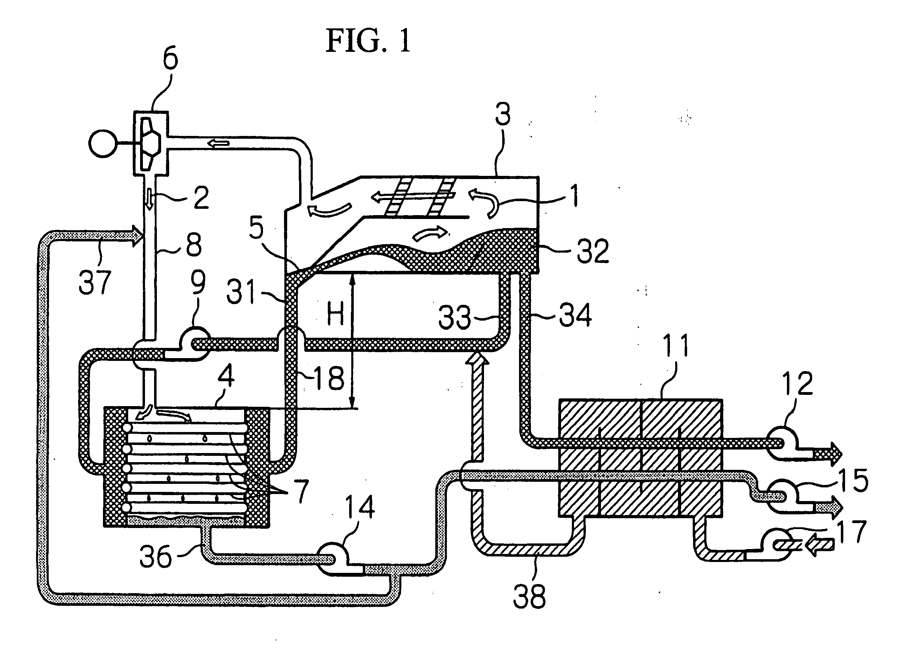

Fig. 1 is an overall diagram of a single-stage flash-evaporation fresh water generating apparatus using mechanical vapor compression, in which an embodiment of an evaporation chamber according to the present invention is used.

Brine 31 heated by heat exchanging means 4 to at least a saturation temperature for an evaporation chamber 3 flows into the evaporation chamber 3 through a nozzle 5. The pressure of the brine 31 is decreased by the nozzle 5 to a pressure for the evaporation chamber, and then, water contained in the brine is vaporized by performing flash-evaporation. The generated vapor (vapor 1) is compressed by mechanical vapor compression means 6, such as a blower, a compressor, and so forth, to turn it into vapor (vapor 2) whose temperature and pressure are higher than those of the vapor 1. The vapor 2 is led to the heat exchanging means 4, where heat exchange with brine 33 is carried out, condensing the vapor to produce product water 36.

An entire heating surface 7 of the heat exchanging means 4 is preferably kept in a condensation heating state having higher heat-transfer efficiency. A portion 37 of the product water 36 should thus be injected at an intermediate position of a pipe 8 which transfers the vapor 2 from the mechanical vapor compression means 6 to the heat exchanging means 4, so that the vapor 2 entering the heat exchanging means 4 becomes saturated. The quantity of the water to be injected is adjusted by a vapor-temperature adjusting means (not shown in the drawing).

Among the brine 31 sent to the evaporation chamber 3, a major portion 33 of the brine 32 after flash-evaporation is returned to the heat exchanging means 4 together with supplied seawater 38 by circulating means 9, such as a pump. A remaining portion 34 preheats the supplied seawater in a seawater preheater 11, which is then discharged using a brine discharge pump 12.

The product water 36 also preheats the supplied seawater 38 at the seawater preheater 11 and is sent to the required places by product water pumps 14 and 15. The supplied seawater 38 is sent into the system by a seawater pump 17, receives heat from the discharged brine 34 and product water 36 at the seawater preheater 11, and is then mixed into the circulating brine 33.

In the figure, a tube-shell heat exchanger is shown as the seawater preheater 11; however, instead of this, a plate-type heat exchanger or an MSF may, of course, be used.

According to the present invention, when arranging the devices in the above-described system, the evaporation chamber 3 is disposed at a higher position than the heat exchanging means 4. By using the head difference H thereof, the pressure of the brine in the heat exchanging means 4 is kept at at least the saturation pressure for the temperature of the vapor 2 so as to prevent the brine from boiling and thus limiting the production of scaling.

The required head difference H is set as described below.

The saturation pressure for the temperature of the vapor 2 compressed by the mechanical compression means 6 is designed/applied so as to have a fixed pressure difference relative to the pressure of the vapor 1. On the other hand, the pressure of the brine in the heat exchanging means 4 is obtained by adding to the pressure of the evaporation chamber 3 a head difference and a pipe resistance of the section running thereto. Therefore, if the total of the pipe resistance and the head difference is the "fixed pressure difference" or above, the brine does not boil in the heat exchanging means 4 in normal operation.

However, the flow of brine may stop for some reason, resulting in the pipe resistance in the pipe and the nozzle being zero, after being output from the heat exchanging means 4. In this case, since the pressure of the brine inside the heat exchanging means 4 decreases by an amount equal to the drop in the pipe resistance, the brine tends to boil in the heat exchanger 4.

In this state also, if the evaporation chamber 3 is disposed at a higher position than the heat exchanging means 4 so that the value obtained by adding the head difference H between the evaporation chamber 3 and the heat exchanging means 4 to the pressure of the evaporation chamber is higher than the saturation pressure for the temperature of the vapor 2, even if the circulation of the brine stops, the pressure of the brine in the heat exchanging means 4 is kept higher than the saturation pressure for the temperature of the vapor 2, which prevents the brine from boiling and limits the production of scaling.

To absolutely avoid boiling at any portion in the heat exchanging means 4, as shown in this figure, it is necessary to consider the head difference between the upper surface of the heat exchanging means 4 and the lower surface of the evaporation chamber 3 as the head difference H.

By disposing the evaporation chamber 3 and the heat exchanging means 4 in this way so as to have the vertical height difference therebetween, the brine flows upward in the connecting pipe 18 that connects the evaporation chamber 3 with the heat exchanging means 4.

Fig. 2 is a sectional view of an embodiment of the evaporation chamber 3. As described with reference to Fig. 1, when the heated brine 31 is sent, via the connecting pipe 18, to the nozzle 5, which is an inlet of the evaporation chamber 3, and is injected into the evaporation chamber 3, the vapor is generated from the water in the brine 39 by flash-evaporation.

The nozzle 5 has a shape whose flow-path cross-section gently reduces, which allows efficient conversion of a portion of the static pressure of the brine 31 into dynamic pressure. The brine is thus injected into the evaporation chamber 3 with a speed corresponding to the dynamic pressure.

Since the ejection direction α from the nozzle 5 is oriented in a direction between 0° and 50° above the horizontal, the ejected brine has a large velocity component in the horizontal direction, and the brine flows toward a brine outlet 24 disposed near a wall opposing the nozzle 5 of the evaporation chamber 3 due to that velocity component in the horizontal direction.

A portion of the bottom surface of the evaporation chamber 3 that is close to the nozzle 5, that is, a portion 25 where the flash-evaporation is carried out, is horizontal, and a portion 26 ahead of it is inclined at an angle β from 20° to 60° above the horizontal.

The velocity component of the brine in the horizontal direction, after the flash-evaporation, is efficiently re-converted to static pressure because the brine runs up the inclined bottom-surface portion 26. As a result, as shown in this figure, at the brine outlet 24, the brine level rises by "h". Therefore, the power required by the brine circulation means can be decreased by this head difference.

According to one calculation, a required pump head of the brine circulating means 9 in Fig. 1, that is, the pipe resistance experienced by the brine when exiting the circulating means 9, passing through the heat exchanging means 4, the connecting pipe 18, the nozzle 5, and the evaporation chamber 3 and returning to the circulating means 9 is about 6 m.

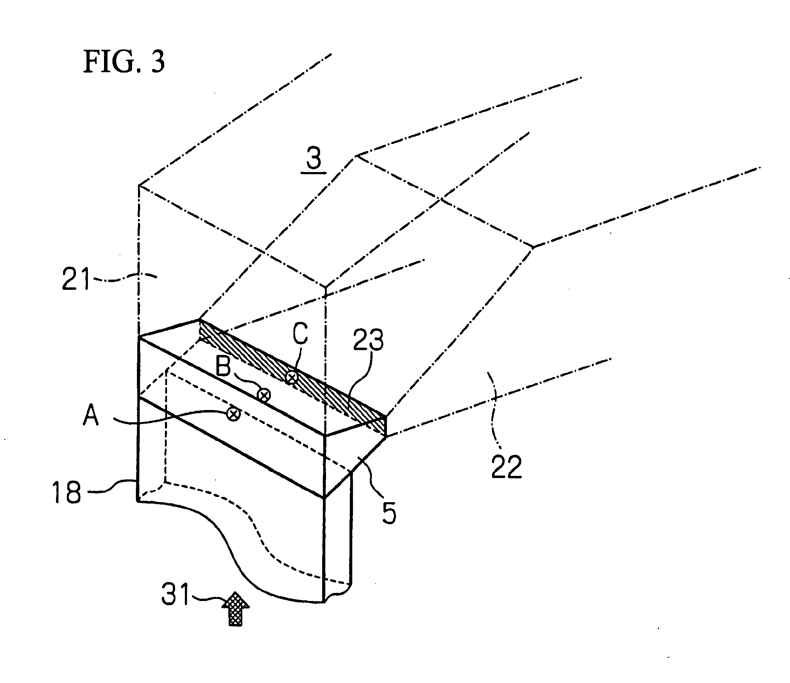

With the above described means, if the dynamic pressure of the brine shown at point C in Fig. 3 described below, that is, half of the dynamic pressure of the brine injected into the evaporation chamber 3, which is 1.25 m, is re-converted into the static pressure, the circulation power can be reduced by approximately 20%.

When the entire bottom surface of the evaporation chamber 3 is formed as a flat surface, without having the inclined bottom-surface portion 26, most of the dynamic pressure of the brine ejected from the nozzle 5 is wasted due to turbulence or vortices in the brine stream.

In addition, it is desirable that a gently curved surface 27 be disposed between the horizontal bottom-surface portion 25 and the inclined bottom-surface portion 26 to connect them. By doing so, at the connecting portion of these two bottom-surface portions, the resistance against the flow of brine decreases, or energy loss caused by the vortices at this point is minimized. The conversion to the static pressure can thus be more efficiently performed, which leads to a reduction in the circulation power by that amount.

In an embodiment shown in Fig. 2, since the ejection direction α of the nozzle 5 is not oriented horizontally but is inclined at an angle from 20° to 50° above the horizontal, the brine 39, which is ejected from the nozzle 5 in laminar form, is released in the ejection direction thereof and follows a parabolic path while flash-evaporation is performed, thereby forming a space between the brine 39 and the bottom surface 25.

The laminar stream of ejected brine 39 generates, due to flash-evaporation, not only vapor 41 from the upper surface, but also vapor 42 from the lower surface. In other words, when the brine is simply ejected in laminar form along the bottom surface of the evaporation chamber, only the upper surface thereof contributes to vapor generation, whereas the upper surface and the lower surface together have twice the area contributing to vapor generation, which improves vapor generation by that same amount.

Furthermore, since the vapor 42 generated from the lower surface of the laminar brine 39 causes the vapor flow 43 to break through the laminar stream 39 in various places and escape upward, the laminar stream 39 becomes very turbulent, further accelerating the vapor.

The acceleration of vapor allows the amount of vapor per unit floor space of the evaporation chamber to be increased and NETD to be decreased, thus allowing effective flash-evaporation in a relatively small evaporation chamber.

Fig. 3 is a diagram showing an embodiment of the nozzle 5 provided in the evaporation chamber 3.

As described above, since a large-capacity seawater desalination apparatus uses a large quantity of brine, the form of brine inlet to the evaporation chamber preferably has a slit-shaped outlet extending in the lateral direction by efficiently using the width of one wall of the evaporation chamber. The nozzle 5 thus has a width equal to the entire width of a front wall 21 of the evaporation chamber 3 and has the slit-shaped outlet 24 disposed so as to extend close to the bottom surface 22 of the evaporation chamber 3.

Brine 31 sent out from connecting pipe 18 enters the nozzle 5. The flow rate of brine increases as the flow-path cross-section decreases in turn at the entrance point A, the mid point B, and the point C at the outlet 23. The static pressure of brine decreases by an amount equal to the increased dynamic pressure and becomes equal to the pressure of the evaporation chamber 3 at the point C.

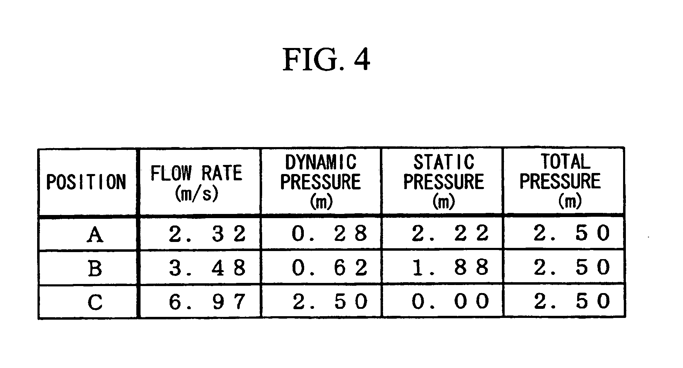

Fig. 4 shows an example of the flow rate (m/s), dynamic pressure (m), static pressure (m), and total pressure (m) of the brine at each point of the nozzle when the evaporation chamber 3 is operated at atmospheric pressure of approximately 1.02 bar and the temperature difference between the temperature of the brine 31 and the saturation temperature of the evaporation chamber, that is, the flash temperature difference, is 5 deg C. This is a calculation example for the a nozzle having the same flow-path width at each of the points A, B, and C and a height ratio of 3:2:1, and shows a static pressure of 0 m in the evaporation chamber at the point C.

The flash temperature difference of 5 deg C corresponds to a pressure difference of 0.195 bar (1.95 m). Therefore, the brine does not flash so long as a pressure of 1.95 m or above is applied, compared to the pressure in the evaporation chamber.

According to this calculation result, the brine has a pressure of 2.22 m at the point A and 1.88 m at the point B. Therefore, no flash-evaporation occurs at the point A, whereas a little flash-evaporation occurs at the point B.

As is obvious from the above calculation result, the nozzle is designed so that the pressure of the brine entering the nozzle 5 from the connecting pipe 18 is higher than the pressure inside the evaporation chamber 3, that is, higher than the pressure difference corresponding to the flash temperature difference, which is the pressure difference between "the saturation pressure corresponding to the temperature of the inlet brine" and "the pressure inside the evaporation chamber" (1.95 bar in the above case). By doing so, the vaporized brine can be kept in the nozzle, which prevents vaporization from starting at a mid-point of the connecting pipe flowing upward. Pressure fluctuations of the brine or unstable brine circulation in the whole system according to changes in the apparent specific gravity due to the commencement of vaporization can thus be avoided.

In practice, the pressure difference corresponding to the flash temperature is not simply added to the pressure of the evaporation chamber. The pressure difference is preferably 1.1 times or above, in view of some margin. In addition, the maximum pressure difference is preferably set to 1.5 times the pressure corresponding to the flash temperature difference, because an excessive pressure difference wastes energy required for the brine circulation.

The evaporation chamber 3 shown in Fig. 2 has a wall 51 that divides the interior thereof into an upper portion and a lower portion. The wall 51 has an opening 52 close to the brine outlet 24. Vapor 41, 42, and 43 generated by the flash-evaporation flows along the flow of brine 39 in the lower portion 53 of the evaporation chamber to the brine outlet 24, reversely flows through the opening 52 to the upper portion 54 of the evaporation chamber, passes mist separators 61 and 62 provided in the upper portion 54 of the evaporation chamber, reaches a vapor outlet 55 disposed in the opposite direction from the opening 52, and is sent to the mechanical vapor compression means.

Most of the mist contained in the vapor can be separated using its inertia by changing its direction by 180° at the opening 52, which allows a substantial decrease in the amount of mist in the vapor flowing to the mechanical vapor compression means.

The portion 51a of the wall 51 close to the nozzle 5 is formed as a slope starting from the upper part of the nozzle exit. The cross-section of the flow path of the lower portion 53 of the evaporation chamber preferably becomes gently wider from the nozzle exit. It is also preferable to suitably dispose guide vanes 56 near the opening 52. In either case, the generated vapor flows smoothly, which contributes to reducing the load on the mechanical vapor compression means.

In this embodiment, two substantially vertical mist separators 61 and 62 are provided in the upper portion 54 of the vapor chamber so as to intercept the flow of the vapor whose direction was reversed at the opening 52. A spray cleaning device 63 for cleaning is disposed at the mist separator 61 at the upstream side of the vapor.

By providing a plurality of mist separators to intercept the flow of the vapor in this way, it is possible to collect the mist that cannot be separated by changing its direction by 180° at the opening 52.

By making the mist separators substantially vertical, the collected mist easily flows down along the mist separators, which allows the mist to be easily discharged from a discharge channel 64 provided below the mist separators. It is possible to solve the problem of re-entrainment of the collected mist that does not smoothly exit, as in a horizontal mist separator 124 used in a conventional MVC (see Fig. 8).

By providing the spraying device for cleaning 63 at the upstream-side mist separator 61, as described above, the mist deposited at the mist separator 61 is diluted, thus preventing scaling. In addition, the scale precipitation problem at the mist separators 61 and 62 and the mechanical vapor compression means can be reduced by eliminating overheating of the vapor that passes the mist separator. Furthermore, it contributes to the separation efficiency of the mist separators.

In addition, because the mist separator 61 is the substantially vertical type, cleaning water sprayed on the upper portion of the mist separator 61 by the spraying device for cleaning 63 flows down from the upper portion to the lower portion along the mist separator, cleaning it down to the lower portion thereof, and is easily discharged from the discharge channel 64.

In Fig. 2, two mist separators are provided, and the spraying device for cleaning is disposed at the one at the upstream side. It is possible to increase the number of mist separators or the spraying devices for cleaning to further improve the separation efficiency.

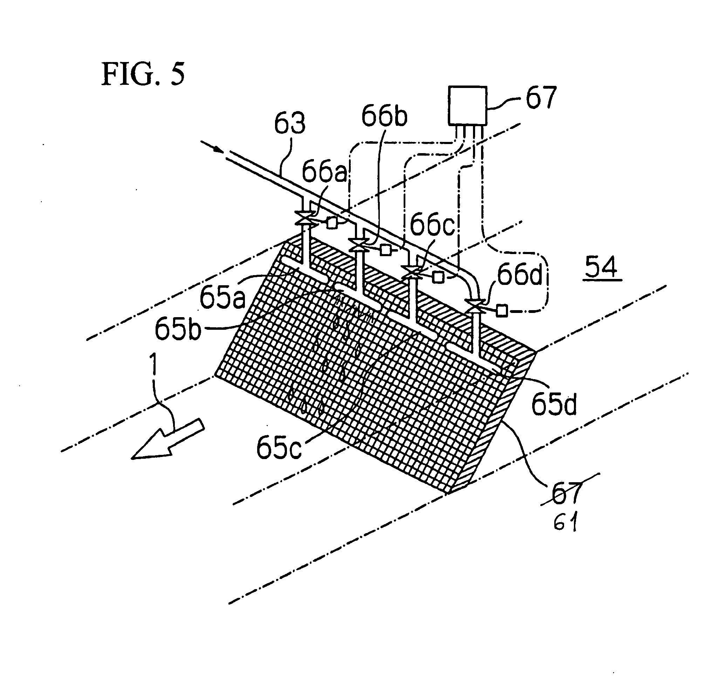

In Fig. 5, the mist separator 61 to be cleaned is divided into several sections, four sections in the case of this figure, and the spraying device for cleaning 63 can clean each of the separate portions in turn.

That is, an ejecting portion of the cleaning water is divided into four nozzles 65a, 65b, 65c and 66d, valves 66a, 66b, 66c, and 66d are provided in lines running to the respective nozzles, and the valves are controlled by a controller 67 so as to open and close independently.

In the figure, only the valve 66b is shown in an open state, and the other valves are closed. The cleaning water is sprayed only from the nozzle 65b and flows down along the vertical mist separator 61, cleaning it down to the lower portion thereof.

Since the part that is cleaned is limited to only the part below the nozzle 65b, the vapor 1 flows in areas other than this area, where the pressure loss is large. Consequently, the increased pressure loss of the mist separator 61 caused by the cleaning can thus be alleviated as a whole, and effective use of the cleaning water is achieved by intermittent cleaning.

### Industrial Applicability

As described above, by using the evaporation chamber according to the present invention, it is possible to increase the capacity of the single-stage flash-evaporation fresh water generating apparatus based on the mechanical vapor compression method, and to provide a seawater desalination apparatus having superior performance compared to the conventional MFS and TVC.

## Claims

1. A single-stage flash-evaporation fresh water generating apparatus based on mechanical vapor compression, comprising:
an evaporation chamber (3) for generating a first vapor by subjecting water from the brine to flash evaporation, by introducing a brine heated to at least a saturation temperature for the pressure in the evaporation chamber (3);
mechanical vapor compression means (6) for compressing the generated first vapor to a compressed second vapor;
heat exchanging means (4) for heating the brine sent to the evaporation chamber (3) by condensing the compressed second vapor;
circulation means (9) for returning the brine, after being subjected to flash evaporation in the evaporation chamber, to the heat exchanging means (4) together with supplied seawater; and
a connecting pipe (18) for returning the brine output from the heat exchanging means (4) to the evaporation chamber (3),
wherein the evaporation chamber (3) is disposed at a position higher than the heat exchanging means (4) so as to give a head difference (H) equal to or greater than the difference between a saturation pressure for the temperature of the second vapor in the heat exchanging means (4) and the pressure of the first vapor, in order to maintain the pressure of the brine in the heat exchanging means (4) at least the saturation pressure for the temperature of the second vapor, even when circulation of the brine is stopped,
wherein a nozzle (5) through which the brine flows into the evaporation chamber (3) from the connecting pipe (18) has a shape whose flow-path cross-section gently reduces along the flow and is oriented in a direction between 0° and 50° above the horizontal, so that part of the static pressure of the brine is efficiently converted to dynamic pressure having a velocity component in a horizontal direction,
and wherein a bottom surface of the evaporation chamber (3) has a horizontal portion (25), which is a portion up to which flash evaporation of the decompressed brine through the nozzle (5) is substantially completed, and a portion (26) where the bottom surface is inclined at an angle between 20° and 60° above the horizontal, which is a portion where the substantially completely flash-evaporated brine is directed towards a brine outlet at a position opposite the nozzle (5) inside the evaporation chamber (3).

2. Apparatus according to Claim 1, wherein the nozzle (5) is formed so as to have a slit-shaped outlet extending laterally close to the bottom surface of a wall facing the horizontal portion of the bottom surface of the evaporation chamber (3), and an ejection direction from the nozzle (5) is oriented 20° to 50° above the horizontal.

3. Apparatus according to claim 2, and configured so that the pressure of the brine entering the nozzle (5) from the connecting pipe (18) is higher than the pressure inside the evaporation chamber (3) by a pressure difference of 1.1 to 1.5 times a difference between the saturation pressure corresponding to the temperature of the brine and the pressure inside the evaporation chamber (3).

4. Apparatus according to any of Claims 1-3, wherein the evaporation chamber (3) has a wall (51) that divides the evaporation chamber into two at an upper portion and a lower portion, and the wall has an opening (52), close to the brine outlet, for allowing the first vapor to flow through from the lower portion of the evaporation chamber (3) to the upper portion of the evaporation chamber (3), an outlet (55) for the first vapor being provided at the opposite side from the opening (52) in the upper portion of the evaporation chamber (3), for reversing the direction of the flow of the first vapor when the first vapor flows through the opening (52) from the lower portion of the evaporation chamber to the upper portion of the evaporation chamber.

5. Apparatus according to Claim 4, wherein, a plurality of substantially vertical mist separators (61, 62) are provided, in the upper portion of the evaporation chamber (3), for intercepting the flow of the first vapor whose direction is reversed, and a spray device (63) is disposed at least at the extreme upstream side of the flow of first vapor for cleaning the mist separators (61, 62).

6. Apparatus according to Claim 5, wherein the mist separators (61, 62) to be cleaned are separated into multiple portions, and the spray device (63) for cleaning cleans each of the separate portions in turn.

## Patentansprüche

1. Eine einstufige Vorrichtung zur Erzeugung von Frischwasser mittels Entspannungsverdampfung, basierend auf mechanischer Dampf-Kompression, welche aufweist:
eine Dampfkammer (3), um einen ersten Dampf zu erzeugen, wobei Wasser aus einer Salzlösung einer Entspannungsverdampfung unterworfen wird,
indem eine Salzlösung, die mindestens auf eine Sättigungstemperatur für den Druck erhitzt wurde in die Dampfkammer (3) eingeleitet wird;
mechanische Dampf-Kompressionsmittel (6), um den ersten erzeugten Dampf zu einem zweiten komprimierten Dampf zu komprimieren;
Wärmetauschermittel (4), um die Salzlösung, die der Dampfkammer (3) zugeleitet wurde, durch Kondensation des komprimierten zweiten Dampfes zu erhitzen;
Umwälzungsmittel (9), um die Salzlösung, nachdem sie einer Entspannungsverdampfung in der Dampfkammer unterworfen wurde, zu den Wärmetauschermitteln (4) zusammen mit zugeführtem Meerwasser zurückzuführen; und
ein Verbindungsrohr (18), um den Ablauf der Salzlösung von den Wärmetauschermitteln (4) zur Dampfkammer (3) zurückzuführen,
wobei die Dampfkammer (3) an einer höheren Position als die Wärmetauschermittel (4) angeordnet ist, um einen Höhenunterschied (H) zu bereitzustellen, der gleich oder größer ist als der Unterschied zwischen einem Sättigungsdruck bei der Temperatur des zweiten Dampfes in den Wärmetauschermitteln (4) und dem Druck des ersten Dampfes, um den Druck der Salzlösung in den Wärmetauschermitteln (4) bei mindestens dem Sättigungsdruck für die Temperatur des zweiten Dampfes zu halten, selbst wenn die Umwälzung der Salzlösung angehalten wird,
wobei eine Düse (5), durch welche die Salzlösung in die Dampfkammer (3) vom Verbindungsrohr (18) fließt, eine Form hat, deren Querschnitt des Strömungspfads sich in Strömungsrichtung gleichmäßig verjüngt und die in eine Richtung zwischen 0° und 50° über der Horizontalen ausgerichtet ist,
so dass ein Teil des statischen Drucks der Salzlösung effizient in einen dynamischen Druck umgewandelt wird, der eine
Geschwindigkeitskomponente in horizontaler Richtung aufweist,
und wobei eine Bodenfläche der Dampfkammer (3) einen horizontalen Bereich (25) aufweist, bis zu welchem Bereich die
Entspannungsverdampfung der dekomprimierten Salzlösung durch die Düse (5) im Wesentlichen erfolgt ist, und einen Bereich (26), bei dem die Bodenfläche in einem Winkel zwischen 20° und 60° über der Horizontalen ansteigt, bei welchem die im Wesentlichen vollständig entspannungsverdampfte Salzlösung zu einem Ablauf der Salzlösung hin geleitet wird, der an einer der Düse (5) gegenüberliegenden Position innerhalb der Dampfkammer (3) angeordnet ist.

2. Vorrichtung nach Anspruch 1, wobei die Düse (5) so geformt ist, dass sie einen spaltförmigen Auslass aufweist, der sich quer nahe der Bodenfläche einer Wandung erstreckt, die dem horizontalen Bereich der Bodenfläche der Dampfkammer (3) zugewandt ist, und wobei eine Ausströmrichtung der Düse (5) 20° bis 50° über der Horizontalen orientiert ist.

3. Vorrichtung nach Anspruch 2, und so konfiguriert, dass der Druck der Salzlösung, welche in die Düse (5) vom Verbindungsrohr (18) eintritt, höher ist als der Druck innerhalb der Dampfkammer (3), mit einer Druckdifferenz von 1,1 bis 1,5-Fach eine Differenz zwischen dem Sättigungsdruck, der mit der Temperatur der Salzlösung korrespondiert, und dem Druck innerhalb der Dampfkammer (3).

4. Vorrichtung nach einem der Ansprüche 1-3, wobei die Dampfkammer (3) eine Wandung (51) aufweist, welche die Dampfkammer in Zwei teilt in einem oberen Teil und einem unteren Teil, und wobei die Wandung eine Öffnung (52) nahe am Ablauf der Salzlösung aufweist, um dem ersten Dampf ein Fließen vom unteren Teil der Dampfkammer (3) zum oberen Teil der Dampfkammer (3) zu erlauben, einen Auslass (55) für den ersten Dampf, der an der gegenüberliegenden Seite der Öffnung (52) im oberen Teil der Dampfkammer (3) angeordnet ist, um die Richtung des Flusses des ersten Dampfes umzukehren, wenn der erste Dampf durch die Öffnung (52) vom unteren Teil der Dampfkammer (3) zum oberen Teil der Dampfkammer (3) fließt.

5. Vorrichtung nach Anspruch 4, wobei eine Mehrzahl von im Wesentlichen vertikalen Nebelabscheidern (61, 62) im oberen Teil der Dampfkammer (3) angeordnet sind, um den Fluss des ersten Dampfes, dessen Richtung umgekehrt ist, zu unterbrechen, und eine Sprüheinrichtung (63) mindestens an der äußersten hochströmenden Seite des Flusses des ersten Dampfes angeordnet ist, um die Nebelabscheider (61, 62) zu reinigen.

6. Vorrichtung nach Anspruch 5, wobei die Nebelabscheider (61, 62), die gereinigt werden sollen, in mehrere Teilbereiche aufgeteilt sind, und die Sprüheinrichtung (63) zur Reinigung jedes der getrennten Teilbereiche abwechselnd reinigt.

## Revendications

1. Appareil de production d'eau douce par évaporation flash à simple étage basé sur la compression de vapeur mécanique, comprenant :
une chambre d'évaporation (3) pour produire une première vapeur par exposition d'eau provenant de la saumure à une évaporation flash par introduction d'une saumure chauffée à au moins une température de saturation pour la pression dans la chambre d'évaporation (3) ;
un moyen de compression de vapeur mécanique (6) pour compresser la première vapeur formée en une seconde vapeur compressée ;
un moyen d'échange de chaleur (4) pour chauffer la saumure envoyée à la chambre d'évaporation (3) par condensation de la seconde vapeur compressée ;
un moyen de circulation (9) pour renvoyer la saumure, après avoir été soumise à l'évaporation flash dans la chambre d'évaporation, au moyen d'échange de chaleur (4) avec l'eau de mer fournie ; et
un conduit de liaison (18) pour renvoyer la saumure évacuée du moyen d'échange de chaleur (4) dans la chambre d'évaporation (3),
où la chambre d'évaporation (3) est disposée à une position plus élevée que le moyen d'échange de chaleur (4) de manière à donner une différence de niveau (H) égale ou supérieure à la différence entre une pression de saturation pour la température de la seconde vapeur dans le moyen d'échange de chaleur (4) et la pression de la première vapeur, afin de maintenir la pression de la saumure dans le moyen d'échange de chaleur (4) au moins à la pression de saturation pour la température de la seconde vapeur, même quand la circulation de la saumure est arrêtée,
où une buse (5) à travers laquelle la saumure coule dans la chambre d'évaporation (3) depuis le conduit de liaison (18) a une forme dont la section droite de passage d'écoulement diminue progressivement le long de l'écoulement et est orientée dans une direction entre 0° et 50° au-dessus de l'horizontale, de sorte qu'une partie de la pression statique de la saumure est efficacement convertie en pression dynamique ayant une composante de vitesse dans une direction horizontale,
et où une surface de fond de la chambre d'évaporation (3) a une partie horizontale (25) qui est une partie jusqu'à laquelle l'évaporation flash de la saumure décompressée à travers la buse (5) est sensiblement réalisée, et une partie (26) où la surface de fond est inclinée à un angle entre 20° et 60° au-dessus de l'horizontale, qui est une partie où la saumure sensiblement complètement évaporée par évaporation flash est dirigée vers une sortie de saumure à une position opposée à la buse (5) à l'intérieur de la chambre d'évaporation (3).

2. Appareil selon la revendication 1 où la buse (5) est formée de manière à avoir une sortie en forme de fente s'étendant latéralement à proximité de la surface de fond d'une paroi faisant face à la partie horizontale de la surface de fond de la chambre d'évaporation (3), et une direction d'éjection depuis la buse (5) est orientée à 20° à 50° au-dessus de l'horizontale.

3. Appareil selon la revendication 2 et configuré de sorte que la pression de la saumure entrant dans la buse (5) depuis le conduit de liaison (18) est supérieure à la pression à l'intérieur de la chambre d'évaporation (3) d'une différence de pression de 1,1 à 1,5 fois une différence entre la pression de saturation correspondant à la température de la saumure et la pression à l'intérieur de la chambre d'évaporation (3).

4. Appareil selon l'une quelconque des revendications 1-3 où la chambre d'évaporation (3) a une paroi (51) qui divise la chambre d'évaporation en deux en une partie supérieure et une partie inférieure, et la paroi a une ouverture (52), proche de la sortie de saumure, pour permettre à la première vapeur de s'écouler de la partie inférieure de la chambre d'évaporation (3) à la partie supérieure de la chambre d'évaporation (3), une sortie (55) pour la première vapeur étant prévue au niveau du côté opposé à l'ouverture (52) dans la partie supérieure de la chambre d'évaporation (3), pour inverser la direction de l'écoulement de la première vapeur quand la première vapeur s'écoule à travers l'ouverture (52) de la partie inférieure de la chambre d'évaporation à la partie supérieure de la chambre d'évaporation.

5. Appareil selon la revendication 4 où une pluralité de séparateurs de brouillard sensiblement verticaux (61, 62) est prévue, dans la partie supérieure de la chambre d'évaporation (3), pour intercepter l'écoulement de la première vapeur dont la direction est inversée, et un dispositif de pulvérisation (63) est disposé au moins au niveau du côté amont extrême de l'écoulement de la première vapeur pour nettoyer les séparateurs de brouillard (61, 62).

6. Appareil selon la revendication 5 où les séparateurs de brouillard (61, 62) à nettoyer sont séparés en multiples parties, et le dispositif de pulvérisation (63) pour nettoyer nettoie chacune des parties séparées tour à tour.
